# EUROPÄISCHE PATENTANMELDUNG

(11) **EP 2 926 659 A1**
(43) Veröffentlichungstag der Anmeldung: **07.10.2015**
(21) Anmeldenummer: 14163600.1
(22) Anmeldetag: 04.04.2014
(51) Int. Cl.: A01N 25/06, A01N 25/08, A01N 25/28, A01N 43/54, A01N 43/653, A01N 43/70, A01N 47/12, A01N 47/30, A01N 47/36

(54) **Biozide Mittel**

(71) Anmelder: LANXESS Deutschland GmbH, 50569 Köln (DE)
(72) Erfinder: Die Erfindernennung liegt noch nicht vor

(57) **Zusammenfassung**

Die vorliegende Erfindung betrifft biozide Mittel mit hervorragender fungizider und algizider Wirkung, bestehend zumindest aus einem Algizid, Propiconazol und einer Iodpropargylverbindung, wobei vorzugsweise mindestens einer der Wirkstoffe gebunden, vorzugsweise mikroverkapselt ist.

## Beschreibung

Die vorliegende Erfindung betrifft biozide Mittel mit hervorragender fungizider und algizider Wirkung, bestehend zumindest aus einem Algizid, Propiconazol und einer Iodpropargylverbindung, wobei vorzugsweise mindestens einer der Wirkstoffe gebunden, vorzugsweise mikroverkapselt ist.

Aus der Literatur sind bereits biozide Mittel bekannt, die Propiconazol und IPBC enthalten. Solche Mittel werden beispielsweise unter dem Handelsnamen Preventol A 12-TK 20 von der Lanxess Deutschland GmbH in Form eines Emulsionskonzentrates mit etwa 10 Gew.-% IPBC und etwa 10 Gew.-% Propiconazol vertrieben.

Weiterhin sind aus JP 2010-126456A Wirkstoffkombinationen aus Algiziden und IPBC als Holzschutzmittel bekannt.

Des Weiteren sind aus JP 2011-121901 A Holzschutzmittel bekannt, die Triazolverbindungen und Harnstoffverbindungen, wie beispielsweise Propiconazol und Diuron enthalten.

In vielen Fällen ist die Langzeitwirkung in den zu schützenden technischen Materialien wie insbesondere Anstrichen und Putzen aber nicht ausreichend gut, weil die Biozide insbesondere im Außenbereich beispielsweise durch Niederschlags- oder Kondenswasser aus den Materialien herausgelöst werden. Das sogenannte "Leaching" führt zu einem Konzentrationsabfall der Biozide der über die Zeit zu einer Verringerung der bioziden Wirkung bis hin zur Wirkungslosigkeit führt. Zusätzlich zu einer verkürzten Wirkungsdauer kann das mit Bioziden belastete Niederschlags- oder Kondenswasser in die Umwelt, insbesondere das Grundwasser gelangen und führt zu einer unerwünschten Kontamination.

Aus diesem Grund ist es das generelle Ziel das Leaching soweit zu verlangsamen, dass die freigesetzte Menge an Bioziden so gering ist, dass keine unnötige Umweltbelastung auftritt, die Menge aber gleichzeitig ausreicht, um das Wachstum unerwünschter Mikroorganismen zu unterdrücken.

Aus dem Stand der Technik sind eine Vielzahl von Methoden bekannt, mit Hilfe derer das Leaching-Verhalten verbessert und die Freisetzung von Bioziden durch Verkapselung, Adsorption an feste Träger oder Einschluss in einer Polymermatrix verlangsamt wird.

Die im Unterscheid zum freien Wirkstoff im Sinne einer verlangsamten Freisetzung eingesetzten verkapselten, an feste Träger adsorbierte oder in einer Polymermatrix gebundene Wirkstoffe werden nachstehend auch gebundene Wirkstoffe genannt.

Bei den Freisetzungsmechanismen können kontrollierte und gesteuerte Freisetzung ("Triggered release") unterschieden werden. Die gesteuerte Freisetzung wird durch Veränderungen in der Kapselhülle initiiert. Diese Veränderungen können durch chemische, biologische, magnetische, elektronische Reize oder durch Licht hervorgerufen werden.

Die kontrollierte Freisetzung erfolgt meist diffüsionskontrolliert. Aus der Literatur sind eine Vielzahl von Systemen mit diffusionskontrollierter Freisetzung bekannt. Zu ihnen gehören polymere Nanopartikel, Mikrospheren, poröse Silika Micropartikel, anorganische Silikastrukturen, Sol-Gel Matrices und modifizierte Nanoclays.

Ein in oft verwendetes Kapselmaterial sind Melamin-Formaldehyd-Harze. So ist beispielsweise aus WO 2004/000953 A bekannt, Biozide in Mikrokapseln mit Wandmaterialien aus speziellen Formaldehyd-Melanin-Harzen einzubringen, um sie in Beschichtungsmaterialien einsetzen zu können, die einen pH-Wert von mehr als 11 aufweisen.

EP 0 758 633 A beschreibt poröse Granulate, die chemische Stoffe, wie z.B. auch Biozide enthalten, die diese in der Anwendung langsam freigeben.

Des weiteren sind Mikrokapseln bekannt geworden, die bevorzugt Zink-Pyrithion oder Irgarol enthalten und die dadurch hergestellt werden, dass wässrige Dispersionen aus Polymerlösung, Wirkstoff und niedrig siedendem Lösungsmittel unter starkem Rühren vom Lösungsmittel befreit werden und die entstehenden Mikrokapseln durch Filtration isoliert werden (siehe US 2006/0246144).

Eine weitere Methode zur Herstellung von "slow release Formulierungen" stellt die Koazervierung dar. Sie wird häufig zur Verkapselung von flüssigen oder festen Wirkstoffen in Suspension bzw. Emulsion genutzt. Man unterscheidet die einfache oder die komplexe Koazervierung. Die grundlegenden physikalischen und chemischen Prozesse bei diesen beiden Verkapselungsmethoden sind gut verstanden und ausführlich in der Literatur beschrieben. In der Patentliteratur ist sowohl die Methode der komplexen Koazervierung (vgl. z.B. GB-A 1475229 und US-A 2,800,458) als auch die der einfachen Koazervierung beschrieben (vgl. z.B. GB-A 1275712).

Die Koazervierung von Iodpropargylverbindungen mit z. B. Gelatine und Gummi Arabicum ist in EP 1 981 629 A beschrieben.

Diesen Verfahren ist gemeinsam, dass entweder der feste oder gelöste Wirkstoff mit einem Verkapselungsmaterial umschlossen (verkapselt) wird, der Wirkstoff durch Adsorption an einen Träger gebunden wird oder Lösungen des Wirkstoffes mit Polymeren eingedampft werden, so dass der Wirkstoff anschließend als Kern umschlossen von einer Polymerwand in Form von feinen Kügelchen vorliegt.

Eine weitere Möglichkeit das Leaching von Wirkstoffen zu unterbinden, bietet die homogene Verteilung des Wirkstoffes in einer polymeren Matrix. Solche, durch Extrusion und Mahlung zu erhaltenden biozidhaltigen, thermoplastischen Polymerpartikel sind in WO 2009/00650 A beschrieben.

Eine bloße Verkapselung oder verzögerte Freisetzung ist aber nicht in jedem denkbaren Fall hilfreich, da verschiedene Wirkstoffe insbesondere in Mischungen unterschiedlich schnell aus Anstrichen und Putzen gewaschen werden.

Es bestand daher die Aufgabe ein biozides Mittel bereitzustellen, das hervorragende fungizide und algizide Wirkung bei gleichzeitig langer Wirkdauer auch unter Witterungsbedingungen miteinander vereint.

Es wurden nun biozide Mittel gefunden, enthaltend
A) zumindest ein Algizid ausgewählt aus der Gruppe der Triazin-Algizide, Harnstoff-Algizide und Uracil-Algizide
B) Propiconazol
C) zumindest eine Iodpropargylverbindung,
wobei vorzugsweise zumindest einer der Wirkstoffe gebunden, vorzugsweise mikroverkapselt ist. Unter dem Begriff gebundene Wirkstoffe werden Wirkstoffe oder Mischungen von Wirkstoffen verstanden die
- verkapselt, vorzugsweise mikroverkapselt und/oder
- an oder auf festen Trägermaterialien adsorbiert und/oder
- in einer Polymermatrix eingeschlossen sind.

Gebundene Wirkstoffe sind vorzugsweise solche die entweder verkapselt, vorzugsweise mikroverkapselt, oder an oder auf festen Trägermaterialien gebunden oder in einer Polymermatrix eingeschlossen sind.

Vorzugsweise ist zumindest einer der Wirkstoffe gebunden, besonders bevorzugt mikroverkapselt.

In einer Ausführungsform ist zumindest ein Algizid gebunden, vorzugsweise mikroverkapselt.

In einer Ausführungsform ist die zumindest eine Iodpropargylverbindung gebunden, vorzugsweise mikroverkapselt.

Die Algizide sind ausgewählt aus der Gruppe der Triazin-Algizide, Harnstoff-Algizide und Uracil-Algizide. Triazin-Algizide sind beispielsweise Terbutryn, Cybutryn, Propazin oder Terbuton, Harnstoff-Algizide sind beispielsweise Diuron, Benzthiazuron, Methabenzthiazuron, Tebuthiuron, und Isoproturon, ein Uracil-Algizid ist beispielweise Terbacil.

Die Algizide sind besonders bevorzugt ausgewählt aus der Gruppe bestehend aus Isoproturon, Diuron, Cybutryn und Terbutryn.

Ganz besonders bevorzugt ist als Algizid Diuron.

Iodpropargylverbindungen sind vorzugsweise ausgewählt aus der Gruppe 3-Iod-2-propynyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, 3-Iod-2-propinyl-2,4,5-trichlorphenylether, 3-Iod-2-propinyl-4-chlorphenylformal (IPCF), Di-(3-Iod-2-propinyl)hexyl-dicarbamat, 3-Iod-2-propinyl-oxyethanol-ethylcarbamat, 3-Iod-2-propinyl-oxyethanol-phenylcarbamat, 3-Iod-2-propinyl-thioxo-thioethylcarbamat, 3-Iod-2-propinyl-carbaminsäureester (IPC), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Brom-2,3-diiod-2-propenylethylcarbamat, 3-Iod-2-propinyl-n-hexylcarbamat, 3-Iod-2-propinyl-cyclohexyl-carbamat

Eine besonders bevorzugte Iodpropargylverbindung ist 3-Iod-2-propinyl-butyl-carbamat (IPBC).

Das Gewichtsverhältnis von Propiconazol zu der Summe an Iodpropargylverbindung(en) kann in einem breiten Bereich variieren. Im Allgemeinen beträgt das Gewichtsverhältnis von Propiconazol zu der Summe an Iodpropargylverbindung(en) 1:100 bis 100:1, bevorzugt 1:20 bis 20:1 und besonders bevorzugt 1:9 bis 9:1.

Das Gewichtsverhältnis von Algizid(en) zur Summe aus Propiconazol und der Summe an Iodpropargylverbindung(en) kann in einem breiten Bereich variieren und beträgt im Allgemeinen 1:100 bis 100:1, bevorzugt 1:20 bis 20:1 und besonders bevorzugt 1:9 bis 9:1.

Die erfindungsgemäßen biozide Mittel enthalten im Allgemeinen 0,5 bis 80 Gew.-%, vorzugsweise 1 bis 70 Gew.-%, insbesondere 1 bis 60 Gew.-% an Wirkstoffen bezogen auf die Summe der Komponenten A), B) und C).

Unter dem Begriff in einer Polymermatrix eingeschlossen sind Partikel, vorzugsweise monolithische Partikel zu verstehen, in denen der Wirkstoff homogen in zumindest einem thermoplastischem Polymer verteilt ist. Unter "homogen verteilt" wird auch die Verteilung von einem nach Mischen und Extrudieren in das zumindest eine thermoplastischem Polymer eingebrachten Wirkstoff verstanden. Lediglich zur Klarstellung sei gesagt, dass Mikrokapseln, die einen Wirkstoffkern besitzen, der von einer Polymerwand umgeben ist, nicht vom Begriff Polymermatrix umfasst ist.

Geeignete thermoplastische Polymere umfassen beispielsweise Polyacrylate, Polyalkylenglykole, insbesondere Polyethylenglycole oder Polyethylen-Polypropylenglykol-Copolymere (Blockcopolymere oder statistisch verteilt), Polyurethane, Polyamide, Polyharnstoffe, Polycarbonate, Polyester oder Mischungen hieraus.

Es können prinzipiell aber auch andere, hier nicht genannte thermoplastische Polymere oder deren Mischungen verwendet werden, bei denen die Glasübergangstemperatur Tg bei 30 bis 250 °C, bevorzugt 50 bis 200 °C liegt.

In einer Ausführungsform weisen 95% aller Partikel eine Teilchengröße von kleiner 100 µm, vorzugsweise von 1 bis 50 µm auf.

Die Polymermatrix weist beispielsweise einen Wirkstoffgehalt von 2 bis 80 Gew.-%, vorzugsweise von 5 bis 60 Gew.-% auf.

Gebunde Wirkstoffe umfassen auch solche, die an oder auf festen Trägermaterialien gebunden sind.

Trägermaterialien sind beispielsweise und bevorzugt Calciumcarbonat, Calciumsilicate, Aluminiumsilicate, Kieselgele, Kieselgur, Zeolite, Schichtsilikate, Silicagele, pyrogene oder gefällte Kieselsäuren oder modifizierte Kieselsäuren.

Ganz besonders bevorzugt handelt es sich bei den Trägermaterialien um pyrogene oder gefällte Kieselsäuren.

Die Bindung von Wirkstoffen an oder auf Trägermaterialien ist bekannt. Entweder bringt man im Falle von flüssigen Wirkstoffen das Trägermaterial direkt mit dem Wirkstoff in Kontakt oder man löst die Wirkstoffe in einem Lösungsmittel und dampft zusammen mit dem Trägermaterial ein.

Des Weiteren können die Wirkstoffe auch in eine Polymermatrix gebracht werden, wenn man die Wirkstoffen in Monomeren löst und hiermit eine Emulsionspolymerisation durchführt.

Die Emulsionspolymerisation ist ein Verfahren der radikalischen Polymerisation von Monomeren in einer wässrigen Phase. Die für eine Emulsionspolymerisation notwendigen Komponenten sind Wasser, ein wasserlöslicher Initiator sowie die Monomere, die eine geringe Wasserlöslichkeit besitzen müssen. Das Ergebnis ist eine Polymerdispersion, d. h. eine Dispersion der aus dem Monomer gebildeten Polymerpartikel in Wasser. Hierbei befindet sich der gleichzeitig im Monomer gelöste Wirkstoff sich dann bevorzugt homogen im Polymer verteilt.

Bevorzugt handelt es sich bei den Emulsionspolymerisaten um PVC, Polystyrol-, Polyacrylat-, Polyacrylnitril- und Polyvinylacetatcopolymere.

Weitere mögliche Verkapselungsmaterialien und Methoden sind beschrieben in Ullmanns Encyclopedia of Industrial Chemistry 2010 Wiley-VCH GmbH & Co. KGaA, Weinheim, 10.1002/14356007.a16_575.pub2 und der darin zitierten Literatur.

Gebundene Wirkstoffe umfassen und sind bevorzugt verkapselte Wirkstoffe, besonders bevorzugt mikroverkapselte Wirkstoffe.

Unter verkapselten Wirkstoffen insbesondere mikroverkapselten Wirkstoffen werden Wirkstoffe verstanden, die von einem Verkapselungsmaterial ganz oder teilweise umhüllt sind. Sie werden nachstehend auch Kapseln oder Mikrokapseln genannt.

Bevorzugte Mikrokapseln zeichnen sich dadurch aus, dass sie beispielsweise eine volumengemittelte Teilchengröße von 0,3 bis 100 µm aufweisen. Bevorzugt weisen die enthaltenen Mikrokapseln eine volumengemittelte Teilchengröße von 5 bis 40 µm auf. Darüber hinaus zeichnen sich die enthaltenen Mikrokapseln dadurch aus, dass der D90 Wert, bestimmt über Laserbeugung als volumengewichtete Verteilung vorzugsweise kleiner als 40 µm ist.

Bevorzugte Mikrokapseln enthalten ein Melamin-Formaldehyd Polymer als Verkapselungsmaterial. Unter dem Begriff Melamin-Formaldehyd Polymer ist ein Polymer zu verstehen, bei dem Melamin, typischerweise mit Formaldehyd in molarem Überschuss, polykondensiert worden ist.

Generelle Verfahren zur Herstellung von Mikroverkapseln, insbesondere auch zur Herstellung von Mikroverkapseln aus Melamin-Formaldehyd Polykondensaten sind bekannt (siehe beispielsweise C.A. Finch, R. Bodmeier, Microencapsulation, Ullmann's Encyclopedia of Industrial Chemistry, 6. Auflage 2001, Electronic Release).

Das Verkapselungsmaterial der enthaltenen Mikrokapseln kann beispielsweise auch andere synthetische, halbsynthetische oder natürliche Aminoplast-Harze enthalten. Unter AminoplastHarzen versteht man im Allgemeinen Polykondensationsprodukte aus Carbonyl-Verbindungen mit NH-Gruppen enthaltenden Verbindungen. Von besonderem Interesse sind in diesem Zusammenhang mit Harnstoff beziehungsweise Phenol modifizierte Melamin-Formaldehyd-Harze (Melamin-Harnstoff-Formaldehyd-Harze, Melamin-Phenol-Formaldehyd-Harze). Als weitere mögliche Aminoplast-Harze können dem Melamin-Formaldehyd Harz beispielsweise Aminoplast-Harze aus einer NH-Gruppen enthaltenden Verbindung und Acetaldehyd oder Glyoxal zugesetzt werden. Des Weiteren können Urethanharze, Cyanamidharze bzw. Dicyanamidharze, Anilinharze, Sulfonamidharze oder Mischungen dieser Harze zugesetzt sein. Diese Harze und deren Herstellung sind dem Fachmann bekannt.

In einer weiteren Ausführungsform können als Verkapselungsmaterial auch synthetische Materialien wie beispielsweise Acrylpolymere und -copolymere, Polyacrylamid, Polyalkylcyanoacrylat, und Poly-(ethylenvinylacetat), Aluminiummonostearat, Carboxyvinylpolymere, Polyamide, Poly-(methylvinylether-maleinsäureanhydrid), Poly-(adipyl-L-lysin), Polycarbonate, Polyterephthalamid, Poly-(vinylacetatphthalat), Poly-(terephthaloyl- L-lysin), Polyarylsulfone, Poly-(methylmethacrylat), Poly-(ε-caprolacton), Polyvinylpyrrolidon, Polydimethylsiloxan, Polyoxyethylene, Polyester, Polyglykolsäure, Polymilchsäure und deren Copolymere, Polyglutaminsäure, Polylysin, Polystyrol, Poly-(styrol-acrylnitril), Polyimide und Polyvinylalkohol eingesetzt werden.

In einer weiteren Ausführungsform können als Verkapselungsmaterial halbsynthetische Materialien wie beispielsweise Celluloseacetat, Celluloseacetatbutyrat, Celluloseacetatphthalat, Cellulosenitrat, Ethylcellulose, Hydroxypropylcellulose, Natriumcarboxymethylcellulose, Hydroxypropylmethylcellulose, Methylcellulose, Hydroxypropylmethylcellulosephthalat, hydrierter Talg, Myristylalcohol, Glycerinmono- oder -dipalmitat, hydriertes Ricinusöl, Glycerylmono- oder -tristearate und 12-Hydroxystearylalkohol eingesetzt werden.

In einer weiteren Ausführungsform können als Verkapselungsmaterial natürliche Materialien wie beispielsweise Gummi Arabicum, Agar, Agarose, Maltodextrin, Natriumalginat, Calciumalginat, Dextran, Fette, Fettsäuren, Cetylalkohol, Milchfeststoffe, Molassen, Gelatine, Gluten, Albumin, Schellack, Stärken, Caseinate, Stearine, Saccharose sowie Wachse, wie Bienenwachs, Carnaubawachs und Spermacetiwachs eingesetzt werden.

Die erfindungsgemäßen bioziden Mittel können in beliebiger Formulierung vorliegen wie beispielsweise in Form von Suspensionskonzentraten, wasserdispergierbaren Pulvern, wasserdispergierbaren Granulaten oder einfachen Pulvermischungen, wobei Suspensionskonzentrate, Pulvermischungen und wasserdispergierbare Granulate bevorzugt sind.

Grundsätzlich sind bevorzugte Formulierungsarten im Wesentlichen abhängig vom Einsatzzweck und den dafür geforderten physikalischen Eigenschaften. Da diese jedoch bekannt sind, ist es für den Fachmann gängige Praxis, in wenigen Versuchen eine bevorzugte Formulierungsart zu ermitteln.

Die Formulierungen können zusätzlich auch noch weitere Stoffe, wie Stabilisatoren, Gebindekonservierungsmittel und weitere Biozide, wie beispielsweise Fungizide, Algizide, Insektizide, Akarizide, Nematizide, Radizide und Herbizide oder Mischungen davon, bevorzugt Fungizide oder Algizide oder Mischungen davon, ganz bevorzugt Algizide enthalten.

Die bioziden Mittel können neben den erfindungsgemäßen Kombinationen gegebenenfalls weiterhin verschiedene Hilfsstoffe enthalten. Für die nachstehend genannten Hilfsstoffe besteht jeweils unabhängig voneinander auch die Möglichkeit, dass sie nicht enthalten sind. Mögliche Hilfsstoffe sind beispielsweise:
- Grenzflächenaktive Stoffe, wie beispielsweise Tenside. Tenside können beispielsweise nichtionische, kationische und amphotere Tenside, vorzugsweise anionische Tenside sein. Anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, zum Beispiel Natrium-, Kalium-, Magnesium-, Calcium-, sowie Ammonium- und Triethanolamin-Salze. Die Alkylethersulfate, Alkyletherphosphate und Alkylethercarboxylate können jeweils beispielsweise von 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecylbenzolsulfonat. Die erfindungsgemäßen bioziden Mittel können dabei beispielsweise von 0,01 bis 10 Gew.-%, vorzugsweise von 0,2 bis 8 Gew.-%, besonders bevorzugt von 0,3 bis 5 Gew.-% und ganz besonders bevorzugt von 0,5 bis 3 Gew.-% an grenzflächenaktiven Stoffen enthalten.

- Entschäumer. Als Entschäumer werden im Allgemeinen grenzflächenaktive Stoffe eingesetzt, die in der tensidischen Lösung nur schwach löslich sind. Bevorzugte Entschäumer sind solche, die sich von natürlichen Fetten und Ölen, Petroleum-Derivaten oder Siliconölen ableiten.
- Benetzungsmittel, wie beispielsweise Alkali-, Erdalkali-, Ammoniumsalze von aromatischen Sulfonsäuren, zum Beispiel Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkoholsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Tris-sterylphenyletherethoxylate, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die erfindungsgemäßen bioziden Mittel können dabei beispielsweise von 0,01 bis 8 Gew.-%, vorzugsweise von 0,2 bis 6 Gew.-%, besonders bevorzugt von 0,3 bis 5 Gew.-% und ganz besonders bevorzugt von 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C₁₀-C₂₀, Natriumhydroxyoctadecansulfonat, Natrium-, Kalium-und Ammoniumsalze von Hydroxyfettsäuren der Kettenlänge C₁₀-C₂₀ und deren Sulfierungs- bzw. Acetylierungsprodukte, Alkylsulfate, auch als Triethanolaminsalze, Alkyl-(C₁₀-C₂₀)-sulfonate, Alkyl-(C₁₀-C₂₀)-arylsulfonate, Dimethyldialkyl-(C₈-C₁₈)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C₁₀-C₁₂ (Di-Natriumsalz), Sulfobernsteinsäure-4-Ester mit Polyethylenglykolnonylphenylether (Di-Natriumsalz), Sulfobernsteinsäure bis-cyclohexylester (Natriumsalz), Ligninsulfonsäure sowie deren Calcium-, Magnesium-, Natrium- und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die erfindungsgemäßen bioziden Mittel können dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% an Emulgatoren enthalten.
- Dispergiermittel, wie beispielsweise Alkylphenolpolyglycolether. Die erfindungsgemäßen bioziden Mittel können dabei beispielsweise von 0,01 bis 15 Gew.-%, vorzugsweise von 0,02 bis 8 Gew.-%, besonders bevorzugt von 0,05 bis 6 Gew.-% und ganz besonders bevorzugt von 0,1 bis 5 Gew.-% an Dispergiermitteln enthalten.
- Stabilisatoren, wie beispielsweise Cellulose und Cellulosederivate. Die erfindungsgemäßen bioziden Mittel können dabei beispielsweise von 0,01 bis 6 Gew.-%, vorzugsweise von 0,01 bis 3 Gew.-%, besonders bevorzugt von 0,01 bis 2 Gew.-% und ganz besonders bevorzugt von 0,01 bis 1 Gew.-% an Stabilisatoren enthalten.
- Stabilisatoren, wie beispielsweise Antioxidantien, Radikalfänger oder UV-Absorber.
- Haftmittel oder Schutzkolloide, wie beispielsweise Carboxymethylcellulose, natürliche und synthetische pulvrige, körnige oder latexförmige Polymere, wie Gummi Arabicum, Polyvinylalkohol, Polyvinylacetat, sowie natürliche Phospholipide, wie Kephaline und Lecithine und synthetische Phospholipid sowie Paraffinöle. Die erfindungsgemäßen bioziden Mittel können dabei beispielsweise von 0,01 bis 8 Gew.-%, vorzugsweise von 0,05 bis 4 Gew.-%, besonders bevorzugt von 0,2 bis 3 Gew.-% und ganz besonders bevorzugt von 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die erfindungsgemäßen bioziden Mittel können dabei beispielsweise von 0,01 bis 20 Gew.-%, vorzugsweise von 0,1 bis 10 Gew.-%, besonders bevorzugt von 0,1 bis 5 Gew.-% und ganz besonders bevorzugt von 0,1 bis 2 Gew.-% an Spreitmitteln enthalten.
- Duftstoffe und Farbstoffe, wie beispielsweise anorganische Pigmente, zum Beispiel Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die erfindungsgemäßen bioziden Mittel können dabei beispielsweise jeweils von 0,001 bis 4 Gew.-%, vorzugsweise von 0,01 bis 1 Gew.-%, besonders bevorzugt von 0,01 bis 0,8 Gew.-% an Duftstoffen und Farbstoffen enthalten.
- Puffersubstanzen, Puffersysteme oder pH-Wert-Regulatoren. Die erfindungsgemäßen bioziden Mittel können dabei beispielsweise jeweils von 0,01 bis 10 Gew.-%, vorzugsweise von 0,1 bis 5 Gew.-% an Puffersubstanzen, Puffersystemen oder pH-Wert-Regulatoren enthalten.
- Verdickungsmittel, wie beispielweise Polysaccharide, Xanthan Gum, Natrium- oder Magnesium Silicate, Heteropolysaccharide, Alginate, Carboxymethylcellulose, Gummi Arabicum oder Polyacrylsäuren, bevorzugt Xanthan Gum.
- Entstaubungsmittel sind beispielsweise Polyglykole und Polyglykolether. Die erfindungsgemäßen bioziden Mittel können dabei beispielsweise jeweils von 0,01 bis 2 Gew.-%, vorzugsweise von 0,05 bis 1 Gew.-%, besonders bevorzugt von 0,1 bis 0,5 Gew.-% an Entstaubungsmitteln enthalten.
- Als Fließmittel oder Trennmittel können beispielsweise hochdisperse Kieselsäure oder Mg-Salze von Fettsäuren eingesetzt werden. Die erfindungsgemäßen bioziden Mittel können dabei zur Verbesserung der Fließfähigkeit der Feststoffe jeweils von 0,01 bis 5 Gew.-%, vorzugsweise von 0,05 bis 3 Gew.-%, besonders bevorzugt von 0,1 bis 2 Gew.-% an Fließmittel enthalten.
- Gebindekonservierungsmittel sind beispielsweise Biozide, Bakterizide und Fungizide. Die erfindungsgemäßen bioziden Mittel können dabei beispielsweise jeweils von 0,01 bis 2 Gew.-%, vorzugsweise von 0,05 bis 1 Gew.-% an Gebindekonservierungsmittel enthalten.

Der Gesamtgehalt der oben genannten Hilfsmittel in den bioziden Mitteln beträgt beispielsweise von 0,001 bis 20 Gew.-%, bevorzugt von 0,1 bis 15 Gew.-% und besonders bevorzugt von 0,1 bis 10 Gew.-%.

Die bioziden Mittel können weiterhin gegebenenfalls Wasser und/oder organische Lösungsmittel wie beispielsweise Oligo- oder Polyalkylenglycole oder Triole, oder Ether der vorgenannten Verbindungen, insbesondere mit einem Molekulargewicht von kleiner 1000 g/mol enthalten.

Ganz bevorzugt werden Wasser oder Ethylenglycol, Diethylenglycol, Triethylenglycol, Tetraethylenglycol, Polyethylenglycol, Propylenglycol, Dipropylenglycol, Polypropylenglcol, Glycerin oder Mono oder Di- Methyl, Ethyl, Propyl oder Butylether der vorgenannten Verbindungen eingesetzt.

Feste Formulierungen, wie beispielsweise Pulvermischungen oder wasserdispergierbare Granulate (WG) können auch noch feste Hilfsmittel wie zum Beispiel natürliche Gesteinsmehle, wie Kaoline, Tonerden, Talkum, Marmor, Kreide, Quarz, Attapulgit, Montmorillonit oder Diatomeenerde oder synthetische anorganische Stoffe, wie hochdisperse Kieselsäure, Aluminiumoxid und Silikate enthalten oder Mischungen davon.

Die festen Formulierungen können sich in an sich bekannter Weise beispielsweise durch innige Vermischung der Einzelkomponenten mit den festen Hilfsmitteln oder durch gemeinsame Zerkleinerung von festen Hilfsmitteln mit den Einzelkomponenten erhalten werden. Weiterhin können die festen Formulierungen durch Trocknung, beispielsweise Sprühtrocknung, einer flüssigen Formulierung erhalten werden.

Die erfindungsgemäßen bioziden Mittel können gegebenenfalls auch noch weitere Wirkstoffe wie beispielsweise Fungizide, Bakterizide, Algizide und/oder Insektizide enthalten, entweder in gebundener oder nicht gebundener Form oder frei von weiteren Wirkstoffen wie beispielsweise Fungizide, Bakterizide, Algizide und/oder Insektizide sein.

Als gegebenenfalls zusätzlich enthaltene Fungizide, Bakterizide, Algizide und/oder Insektizide können beispielsweise eingesetzt werden:
Triazole wie Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-(4'-chlorophenoxy)-3,3-dimethylbutan-2-on sowie deren Metallsalze und Säureaddukte;
Pyridine und Pyrimidine wie Ancymidol, Buthiobat, Fenarimol, Mepanipyrin, Nuarimol, Pyroxyfur, Triamirol;
Succinat-Dehydrogenase Inhibitoren wie Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthalin-Derivate wie Terbinafin, Naftifin, Butenafin, 3-Chloro-7-(2-aza-2,7,7-trimethyl-oct-3-en-5-in);
Sulfenamide wie Dichlorfluanid, Tolylfluanid, Folpet, Fluorfolpet; Captan, Captofol;
Benzimidazole wie Carbendazim, Benomyl, Fuberidazole, Thiabendazol oder deren Salze;
Morpholinderivate wie Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie: 2-Mercaptobenzothiazol;
Benzthiophendioxide wie:Benzo[b]thiophen-S,S-dioxid-carbonsäurecyclohexylamid;
Benzamide wie: 2,6-Dichloro-N-(4-trifluoromethylbenzyl)-benzamid, Tecloftalam;
Borverbindungen wie: Borsäure, Borsäureester, Borax;
Formaldehyd und formaldehydabspaltende Verbindungen wie Benzylalkoholmono-(poly)-hemiformal, 1,3-Bis(hydroxymethyl)-5,5-dimethy-limidazolidine-2,4-dione (DMDMH), Bisoxazolidine, n-Butanol-hemiformal, Cis 1-(3-Chlorallyl)-3,5,7-triaza-1-azoniaadamantane chlorid, 1-[1,3-Bis(hydroxymethyl-2,5-dioxoimidazolidin-4-yl]-1,3-bis(hydroxymethyl)urea, Dazomet, Dimethylol-harnstoff, 4,4-Dimethyl-oxazolidine, Ethylenglycol-hemiformal, 7-Ethyl-bicyclooxazolidine, Hexa-hydro-S-triazine, Hexamethylentetramin, N-Hydroxymethyl-N'-methylthioharnstoff, Methylenbis-morpholin, Natrium N-(Hydroxy-methyl)glycinat, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff (TMAD);
Isothiazolinone wie N-Methylisothiazolin-3-on, 5-Chlor-N-methylisothiazolin-3-on, 4,5-Trimethylen-isothiazolinon, 4,5-Benzisothiazolinon, N-Methyl-benzisothiazolinon, N-Butylbenzisothiazolinon;
Aldehyde wie Zimtaldehyd, Formaldehyd, Glutardialdehyd, ß-Bromzimtaldehyd, o-Phthaldialdehyd;
Thiocyanate wie: Thiocyanatomethylthiobenzothiazol, Methylenbisthiocyanat;
Quartäre Ammoniumverbindungen und Guanidine wie Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
Iodderivate wie Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-hexylcarbamat, 3-Iod-2-propinyl-cyclohexyl-carbamat, 3-Iod-2-propinyl-phenylcarbamat;
Phenole wie Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester ,o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;
Mikrobizide mit aktivierter Halogengruppe wie Bronidox, 2-Brom-2-nitro-1,3-propandiol, 2-Brom-4'-hydroxy-acetophenon, 1-Brom-3-chlor-4,4,5,5-tetramethyl-2-imidazoldinone, ß-Brom-ß-nitro-styrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-propionamid, 1,2-Dibrom-2,4-dicyanobutan, Halane, Halazone, Mucochlorsäure, Phenyl-(2-chlor-cyan-vinyl)sulfon, Phenyl-(1,2-dichlor-2-cyanvinyl)sulfon, Trichlorisocyanur-säure;
Pyridine wie 1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie Azoxystrobin, Dimoxystrobin, Fluoxastrobin, Kresoximmethyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]-ethylidene]amino]oxy]-methyl]phenyl]-3H-1,2,4-triazol-3-one (CAS-Nr. 185336-79-2);
Metallseifen wie Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, -benzoat;
Metallsalze wie Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;
Oxide wie: Oxide der Metalle Zinn, Kupfer und Zink wie z.B. Tributylzinnoxid, Cu₂O, CuO, ZnO;
Oxidationsmittel wie Wasserstoffperoxid, Peressigsäure, Kalium-persulfat;
Dithiocarbamate wie Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie 2,4,5,6-Tetrachlorisophthalodinitril, Dinatrium-cyano-dithioimidocarbamat;
Chinoline wie: 8-Hydroxychinolin und deren Cu-Salze;
sonstige Fungizide und Bakterizide wie Bethoxazin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclo-hexyldiazeniumdioxy)-tributylzinn bzw. K-Salze, Bis-N-(cyclohexyldiazeniumdioxy)-kupfer, Iprovalicarb, Penflufen, Solatenol, Fenhexamid, Spiroxamin, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenon, Cyflufenamid, Tiadinil, Teebaumöl, Phenoxyethanol,
Ag, Zn oder Cu-haltige Zeolithe allein oder eingeschlossen in polymere Werkstoffe.

Ganz besonders bevorzugt handelt es sich bei den Fungiziden und Bakteriziden um:
Azaconazol, Bromuconazol, Cyproconazol, Dichlobutrazol, Diniconazol" Hexaconazol, Metaconazol, Penconazol, Propiconazol, Tebuconazol, Dichlofluanid, Tolylfluanid, Triadimefon, Fluorfolpet, Methfuroxam, Carboxin, Benzo[b]thiophen-S,S-dioxid-carbonsäurecyclohexylamid, Fenpiclonil, 4-(2,2-Difluoro-1,3-benzodioxol-4-yl)-1H-pyrrol-3-carbonitril, Butenafin, Imazalil, N-Methyl-isothiazolin-3-on, 5-Chlor-N-methylisothiazolin-3-on, Penflufen, Solatenol, Dichlor-N-octylisozhiazolinon, Mercaptobenzthiazol, Thiocyanatomethylthiobenzothiazol, Thiabendazol, Benzisothiazolinon, N-(2-Hydroxypropyl)-amino-methanol, Benzylalkohol-(hemi)-formal, N-Methylolchloracetamid, N-(2-Hydroxypropyl)-amin-methanol, Glutaraldehyd, Omadine, Zn-Omadine, Dimethyldicarbonat, 2-Brom-2-nitro-1,3-propandiol, Bethoxazin, o-Phthaldialdehyd, 2,2-Dibrom3-nitril-propionamid, 1,2-Dibrom-2,4-dicyanobutan, 1,3-Bis(hydroxymethyl)-5,5-dimethylimidazolidine-2,4-dione (DMDMH), Tetramethylol-acetylen-diharnstoff (TMAD), Ethylenglycol-hemiformal, p-Hydroxybenzoesäure, Carbendazim, Chlorophen, 3-Methyl-4-chlorphenol, o-Phenylphenol.

Bei den Algiziden handelt es sich bevorzugt um:
Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryn, Azimsulfuron,
Benazolin, Benfluralin, Benfuresat, Bensulfuron, Bensulfid, Bentazon, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylat, Bialaphos, Benzoyl-prop, Bromobutide, Butroxydim,
Carbetamid, Carfentrazone-ethyl, Carfenstrol, Chlomethoxyfen, Chloramben, Chlorbromuron, Chlorflurenol, Chloridazon, Chlorimuron, Chlornitrofen, Chloressigsäure, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cycloat, Cycloxydim, Chloroxynil, Clodinafop-propargyl, Cumyluron, Clometoxyfen, Cyhalofop, Cyhalofop-butyl, Clopyrasuluron, Cyclosulfamuron, Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diduron, DNOC, DSMA, 2,4-D, Daimuron, Dalapon, Dazomet, 2,4-DB, Desmedipham, Desmetryn, Dicamba, Dichlobenil, Dimethamid, Dithiopyr, Dimethametryn,
Eglinazin, Endothal, EPTC, Esprocarb, Ethalfluralin, Ethidimuron, Ethofumesat, Ethobenzanid, Ethoxyfen, Ethametsulfuron, Ethoxysulfuron,
Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamon, Flumioxzim, Flupyrsulfuron-methyl, Fluthiacet-methyl,
Glyphosate, Glufosinate-ammonium
Haloxyfop, Hexazinon,
Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
Ketospiradox,
Lactofen, Lenacil, Linuron,
MCPA, MCPA-hydrazid, MCPA-thioethyl, MCPB, Mecoprop, Mecoprop-P, Mefenacet, Mefluidid, Mesosulfuron, Metam, Metamifop, Metamitron, Metazachlor, Methabenzthiazuron, Methazol, Methoroptryne, Methyldymron, Methylisothiocyanat, Metobromuron, Metoxuron, Metribuzin, Metsulfuron, Molinat, Monalid, Monolinuron, MSMA, Metolachlor, Metosulam, Metobenzuron,
Naproanilid, Napropamid, Naptalam, Neburon, Nicosulfuron, Norflurazon, Natriumchlorat,
Oxadiazon, Oxyfluorfen, Oxysulfuron, Orbencarb, Oryzalin, Oxadiargyl,
Propyzamid, Prosulfocarb, Pyrazolate, Pyrazolsulfuron, Pyrazoxyfen, Pyribenzoxim, Pyributicarb, Pyridat, Paraquat, Pebulat, Pendimethalin, Pentachlorophenol, Pentoxazon, Pentanochlor, Petroleumöle, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
Quinmerac, Quinocloamine, Quizalofop, Quizalofop-P, Quinchlorac,
Rimsulfuron
Sethoxydim, Sifuron, Simazine, Simetryn, Sulfosulfuron, Sulfometuron, Sulfentrazone, Sulcotrione, Sulfosate,
Teeröle, TCA, TCA-Natrium, Tebutam, Tebuthiuron, Terbacil, Terbumeton, Terbutylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thdiazimin, Thiazopyr, Triflusulfuron,
Vernolat.

In einer bevorzugten Ausführungsform enthalten die erfindungsgemäßen flüssigen Mittel keine weiteren Fungizide, Bakterizide, Algizide und/oder Insektizide.

Die Erfindung betrifft weiterhin die Verwendung der erfindungsgemäßen bioziden Mittel zum Schutz von technischen Materialien. Als technische Materialien kommen insbesondere Klebstoffe, Leime, Papier, Karton, Leder, Holz, Holzwerkstoffe, Holz-Plastik-Verbundstoffe, Anstrichmittel, Beschichtungsmittel, Putze, Kühlschmiermittel und Wärmeüberleitungsflüssigkeiten in Frage. Ganz besonders bevorzugt sind Anstrichmittel, Beschichtungsstoffe, Putze, Holz und Holzwerkstoffe.

Die Erfindung betrifft außerdem ein Verfahren zum Schutz von technischen Materialien vor Befall und/oder Zerstörung durch Mikroorganismen, das dadurch gekennzeichnet ist, dass man die erfindungsgemäßen bioziden Mittel unverdünnt oder mit Wasser verdünnt auf den Mikroorganismus oder dessen Lebensraum einwirken lässt.

Die Erfindung betrifft außerdem technische Materialien, erhältlich durch Behandlung von technischen Materialien mit den erfindungsgemäßen bioziden Mitteln.

Im Falle von Farben und Beschichtungsmassen werden sowohl das noch flüssige, wie auch das getrocknete System gegen den Befall durch Mikroorganismen, besonders Pilzen und Algen geschützt.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise werden die erfindungsgemäßen Mittel gegen Pilze, insbesondere Schimmelpilze, holzverfärbende und holzzerstörende Pilze (Basidiomyceten) sowie gegen Algen eingesetzt.

Bei Algen handelt es sich vorzugsweise um prokaryotische Algen (Cyanophyta, Blaualgen) wie beispielsweise Vertreter aus der Unterklasse Coccogoneae und der Unterklasse Hormogoneae.

Beispielhaft seien aus der Ordnung Chroococcales Arten der Gattungen Synechococcus, Chroococcus, Gloeocapsa, Aphanocapsa, Aphanothece, Microcystis und Merismopedia; aus den Ordnungen Chamaesiphonales und Pleurocapsales Arten der Gattungen Chamaesiphon und Dermatocarpa; aus der Ordnung Oscillatoriales Arten der Gattungen Phormidium, Schizothrix, Spirulina, Plectonema und Lyngbya; aus der Ordnung Nostocales Arten der Gattungen Nostoc, Rivularia, Tolypothrix, Scytonema, Anabaenopsis, Calothrix und Aulosira; aus der Ordnung Stigonematales Arten der Gattungen Stigonema, Fischerella, Hapalosiphon und Mastigocladus genannt.

Ferner zeigen die Mittel auch eine gute Wirksamkeit gegen eukaryotische Vertreter aus den Abteilungen Heterokontophyta, Rhodophyta, Chlorophyta, Euglenophyta, Cryptophyta, Dinophyta und Haptophyta.

Beispielhaft seien aus der Klasse Xanthophyceae Arten der Gattungen Tribonema und Vaucheria; aus der Klasse Chrysophyceae Arten der Gattungen Chrysocapsa, Rhizochrysis, Cfhrysosphaera, Phaeothamnion und Thallochrysis; aus der Klasse Phaeophyceae (Braunalgen) Arten der Gattungen Ectocarpus, Pylaiella, Cutleria, Zanardinia, Dictyota, Padina, Dictyopteris, Laminaria, Macrocystis, Lessonia, Nerocystis, Chorda, Alaria, Fucus, Ascophyllum, Himanthalia, Sargassum, Cystoseira, Halidrys, Pelvetia, Coccophora und Durvilla; aus der Klasse Rhodophyceae (Rotalgen) Arten der Gattungen Porphyridum, Bangia, Porphyra, Corallina, Lithothamnia, Lithophyllum, Rhodymania, Delesseria, Grinnellia, Platysiphonia, Polysiphonia, Ceramium, Plumaria, aus der Klasse Chlorophyceae (Grünalgen) Arten der Gattungen Chlorococcum, Chlorella, Spongiochloris, Monostroma, Ulva, Enteromorpha, Ulothrix, Trentepohlia, Apatococcus, Desmococcus, Cladophora, Siphonocladus, Valonia, Caulerpa, Bryopsis, Acetabularia, Halimeda und Tuna genannt.

Als Pilze seien beispielsweise Mikroorganismen der folgenden Gattungen genannt:
Alternaria, wie beispielsweise Alternaria tenuis, Aspergillus, wie beispielsweise Aspergillus niger, Chaetomium, wie beispielsweise Chaetomium globosum, Coniophora, wie beispielsweise Coniophora puetana, Lentinus, wie beispielsweise Lentinus tigrinus, Penicillium, wie beispielsweise Penicillium glaucum, Polyporus, wie beispielsweise Polyporus versicolor, Aureobasidium, wie beispielsweise Aureobasidium pullulans, Sclerophoma, wie beispielsweise Sclerophoma pityophila, Trichoderma, wie beispielsweise Trichoderma viride.

Die Aufwandmenge der erfindungsgemäßen Mittel richtet sich nach der Art und dem Vorkommen der zu bekämpfenden Mikroorganismen sowie nach der Zusammensetzung des zu schützenden Materials. Die optimale Einsatzmenge kann durch Testreihen einfach und in einer dem Fachmann hinlänglich bekannten Weise ermittelt werden. Im Allgemeinen wird das erfindungsgemäße biozide Mittel so eingesetzt, dass die Gesamtkonzentration der Wirkstoffe gemäß den Komponenten A), B) und C) im zu schützenden Material von 20 bis 10.000 Gew.-ppm, vorzugsweise 50 bis 5000 Gew.-ppm beträgt.

Der Vorteil der Erfindung ist darin zu sehen, dass die erfindungsgemäßen bioziden Mittel ein überlegenes, weil vermindertes Leachingverhalten bei gleichzeitig hoher Wirksamkeit und Wirkdauer zeigen.

Die folgenden Beispiele erläutern die vorliegenden Erfindung.

### Beispiele

### Materialien:

Gummi Arabicum-Lösung (4 Gew.-%)
Coadis™ BR3 (50 Gew.-% in H2O) (Dispersionsreagenz; wässrige Polyacrylatsalz-Lösung der Firma Coatex)
SILOFOAM®SRE (Silikon-Antischaumemulsion Entschäumer der Firma Wacker
Maprenal®-Wasser-Lösung (1:1) (Maprenal® MF 921w/85WA Melamin-Formaldehyd Bindemittel der Firma INEOS Melamines)
Preventol® D7 (Gebindekonservierungsmittel mit etwa 1,5 Gew.-% Chlormethylisothiazolinon/Methylisothiazolinon 3:1)
Preventol® BIT 20D (Gebindekonservierungsmittel mit etwa 20 Gew.-% Benzisothiazolinon) Harnstoff
Preventol® A 6 (Diuron)
Preventol® MP 100 (IPBC)
Preventol® A 12 (Propiconazole)
Sipernat® 50 S (gefällte Kieselsäure; Evonik)
Prevento® A 14-D (Suspension enthaltend 20% Diuron, 10% BCM, 3% OIT)
Preventol® MP 400 (Suspension enthaltend 40 % IPBC; Hersteller Lanxess)
Soprophor® S25 (Emulgator auf Basis von Tris-sterylphenyletherethoxylaten)
Preventol® BM 25 (Gebindekonservierungsmittel enthaltend 2,4 Gew.-% Benzisothiazolinon und 4,9 Gew.-% Methylisothiazolinon)
Rhodopol-G® (Verdicker auf Basis von Xanthan Gum der Firma Solvay Rhodia)
Pluronic F127: Ethylenoxid-Propylenoxid-Blockcopolymer
Oparyl MT 820: Natrium-didisobutylnaphthalinsulfonat

### Beispiel 1 (Herstellung von Propiconazol auf Sipernat 50 S)

463 g Propiconazol (Gehalt 97,1 Gew.-%) wurden einem Topf vorgelegt und auf 60 °C erhitzt. Hierzu gab man unter Flügelblattrührung langsam 300 g Sipernat 50 S. Die zunächst teigige Masse wurde nach kurzer Zeit gut rührbar und leicht fließend. Zum Schluss wurden noch 3,75 g Aerosil 200 zugegeben und weiter gerührt.

Man erhielt ein weißes, leicht fließendes Pulver. Zu Überprüfung der Homogenität wurden an drei verschiedenen Stellen Proben gezogen und mit HPLC auf den Wirkstoffgehalt untersucht:
Es wurden dabei Gehalte von 58,7 Gew.-%, 58,7 Gew.-% und 59,5 Gew.-% Propiconazol ermittelt.

### Beispiel 2 (Herstellung von verkapselten Diuron)

In einem 1000 ml Edelstahlbecher wurden bei Raumtemperatur 33,79 g Gummi Arabicum-Lösung, 6,75 g Coadis® BR3-Lösung und 451,5 g Wasser zusammen mit 2,7 g Entschäumer Silfoam®SRE vorgelegt. Durch Zugabe von Zitronensäure-Lösung (50 Gew.-%) wurde der pH-Wert auf 2,99 gestellt. Anschließend wurden 135 g Diuron unter Rührung zugegeben und für 30 Minuten mit einem Rührstab (Ultra-Turrax) durchmischt. Der Rohansatz wurde in einen 1000 ml-Planschlifftopf überführt und auf die Abscheidungstemperatur von 60°C erhitzt. Bei dieser Temperatur wurden 135,5 g einer Maprenal®-Wasser-Lösung (1:1) über einen Zeitraum von 3 Stunden zur Diuron-Suspension zugetropft. Nach beendeter Zugabe wurde die Mischung auf 80°C erhitzt und 4 Stunden gerührt. Danach wurde der Ansatz auf Raumtemperatur abgekühlt und für 12 Stunden weiter gerührt. Der pH-Wert wurde anschließend durch Zugabe von Natriumhydroxid-Lösung (50 Gew.-%) auf pH 8 eingestellt. Danach wurden die 2,26 g Soprophor® S25, 0,75 g Preventol® D7, 0,72 g Preventol® BIT 20D, 1,2 g Rhodopol-G® und 37.65 g Harnstoff zugegeben und gerührt bis zur Homogenität. Gehalt: 16,5 Gew.-% Diuron.

### Beispiel 3 (Herstellung von verkapseltem IPBC)

In einem 1L-Edelstahltopf wurden bei Raumtemperatur 3,76 g Coadis BR, 37,5 g 4 Gew.-%ige Gummi Arabicum-Lösung und 3,03 g Antischaummittel Wacker SRE in 637,22 g Wasser unter Rühren zu einer leicht trüben Lösung verarbeitet.

Dann wurde durch Zugabe von 8,85 g einer 50 Gew.-%igen Lösung von Citronensäure in Wasser der pH-Wert von pH = 7,70 auf pH = 2,96 abgesenkt.

Die so erhaltene Lösung wurde in einen 1000 ml-Planschlifftopf mit Impellerrührer und Ultraturrax überführt. Unter Rührung mit einem Impellerrührer wurden bei ca. 400-420 U/min 150,09 g IPBC zugegeben.

Danach wurde auf 70°C aufgeheizt, wobei ab 60°C und dem beginnenden Schmelzen des IPBC der Ultra-Turrax zugeschaltet (15600 U/min) und nach Erreichen von 70°C mind. 30 min. emulgiert wurde.

Anschließend wurden 150 g einer 50 Gew.-%igen Lösung von Marprenal MF 921w/85WA in Wasser binnen 3 h zudosiert. Der Ultra-Turrax lief zunächst weiter mit. Nachdem 10 % des Melamin-Formaldehyd Polymers zudosiert wurde, wurde der Ultra-Turrax abgestellt und der Reaktionsansatz nur noch mittels Impellerrührer bei unveränderter Rührgeschwindigkeit gerührt. Nach vollständiger Zudosierung des Melamin-Formaldehyd Polymers wurde der Reaktionsansatz noch 4 h bei 70 °C nachgerührt, dann abgelassen und unter Membranpumpenvakuum abgesaugt. Der feuchte Nutschkuchen wurde dann mit 67 g, 27 g und 7 g heißem (80 °C) Wasser gewaschen. Man erhielt 312.50 g des weißen, feuchten Produktes.

### Beispiel 4

Bei Raumtemperatur wurden 75,57 g Preventol MP 400, 30 g und 104 g Wasser gerührt. Hierzu gab man unter Rühren 25 g Propiconazol auf Sipernat 50 S (s. Beispiel 1) und rührte 30 Minuten bis die Suspension homogen war. Anschließend wurden 269,46 g der Kapselsuspension aus Beispiel 2 zugegeben und unter langsamen Rührung homogenisiert. Hierzu gab man unter weiterem Rühren 0,5 g Preventol D 7, 0,5 g Preventol BIT 20 D, 20,0 g einer 3 %igen wäßrigen Lösung von Rhodopol G in Wasser (Xanthan-Gum Lösung) und weitere 6 g Wasser. Die homogene weiße Suspension enthielt 9,0 Gew.-% Diuron, 6,1 Gew.-% IPBC und 3,0 Gew.-% Propiconazol. Die Viskosität (Rotationsviskosimeter RC 20 / Rheotec) betrug 370,3 mPas bei 30 1/s.

### Beispiel 5

### Propiconazol Emulsion

Bei RT wurden 61,66g Propiconazol und 21,43g Methyloleat unter Rühren miteinander vermischt. Hierzu gab man 10g Soprophor S 25, 1,5g Pluronic F 127 und 2,5g Oparyl MT 820 und ließ 30 Minuten rühren. Anschließend gab man 322,3g Wasser dazu und emulgierte am Dissolver (10000 U/min). Zum Schluss wurden noch 0,5 g Preventol D 7, 0,5 g Preventol BIT 20 D, 39,8 g einer 3 %igen Lösung von Rhodopol G in Wasser und weitere 39,8 g Wasser unter Rühren zugegeben. Die weiße Emulsion enthielt 12,7 Gew.-% Propiconazol (HPLC).

### Herstellung der Suspoemulsion

Bei Raumtemperatur werden 90 g Preventol MP 400-D und 26,2 g Wasser mit 150 g der Propiconazol Emulsion gemäß diesem Beispiel gerührt. Anschließend gab man unter weiterem Rühren 327,27 g der Kapselsuspension gemäß Beispiel 2, 0,6 g Preventol D 7, 0,6 g Preventol BIT 20 D, 2,83 g 3%ige wäßrige Lösung von Rhodopol G und 3,67 g weiteres Wasser.

Man erhielt eine weiße Suspoemulsion mit folgenden Wirkstoffgehalten (HPLC):
8,9 Gew.-% Diuron
6,0 Gew.-% IPBC
3,2 Gew.-% IPBC
Viskosität: 237 mPas bei 30 1/s.

### Beispiel 6

10 g Pluronic F 127 und 10 g Soprophor S 25 wurden zunächst in 95,6 g Wasser gelöst und dann unter Rühren 62,76 g des Verkapselten IPBC aus Beispiel 3 zugegeben. Unter weiteren Rühren gibt man dann noch 272,73 g des verkapselten Diuron aus Beispiel 2 zu und rührt 30 Min nach. Anschließend gab man noch 1,0 g Preventol BM 25, 15,05 g 3 %iger Rhodopol G Lösung und weitere 8,35 g Wasser unter Rühren zu.

Man erhielt eine weiße, homogene Suspension mit einer Viskosität von 541 mPas bei 30 1/s (Rotationsviskosimeter / Fa. Rheotec). Wirkstoffgehalte (HPLC):
8,9 Gew.-% Diuron
6,3 Gew.-% IPBC
3,0 Gew.-% Propiconazol.

### Beispiel 7: Untersuchung der fungiziden und algiziden Wirksamkeit

Zur Beurteilung der fungiziden und algiziden Wirksamkeit werden zwei Aussendispersionsfarben mit den bioziden Mitteln gemäß Beispiel 4, eine homogene weiße Suspension enthaltend 9,0 Gew.-% Diuron, 6,1 Gew.-% IPBC und 3,0 Gew.-% Propiconazol in den angegebenen Mengen ausgestattet.

Als Aussendispersionsfarben wurden eingesetzt:

### Farbe Nr. 1:

| | | |
|---|---|---|
| Tronox Titan RKB2 | 35.0 | Titandioxid |
| EWO-powder | 20.0 | BaSO₄ |
| Micro Mica | 15.0 | Magnesiumaluminiumsilikat |
| Talkum AT1 | 5.0 | Magnesiumsilikat |
| Kreide BLP2 | 25.0 | Calcit (CaCO₃) |
| Tylose MH 2000 P2, 2% | 20.0 | Methyl-hydroxy-ethyl-cellulose |
| H₂O | 5.0 | Destilliertes Wasser |
| Calgon N, 10% | 2.5 | Polyphosphat |
| Pigment-distributor A, 10% | 2.5 | Polyacrylsäuresalz |
| Mowilith DM 2H (binder) | 80.0 | Polyvinylacetat |
| Summe | 210.0 | |
| Feststoffanteil | 140.0 | **66.7 %** |

### Farbe Nr. 2:

| | | |
|---|---|---|
| Tronox Titan RKB2 | 40.0 | Titandioxid |
| Talco 1N | 15.0 | Magnesiumsilikat |
| Durcal 5 | 45.0 | Calcit (CaCO₃) |
| Walsroder MC 3000 S 2% | 30.0 | Methylcellulose |
| H2O | 6.5 | Destilliertes Wasser |
| Calgon N 10% | 3.0 | Polyphosphat |
| Pigment-distributor A 10% | 1.0 | Polyacrylsäuresalz |
| Agitan 281 (1:1 in Texanol) | 1.0 | Antischaummittel |
| White spirit | 5.0 | Mischung aliphatischer Kohlenwasserstoffe |
| Butyldiglycolacetat | 1.5 | |
| Acronal 290 D (binder) | 71.0 | Polyacrylsäureester |
| Summe | 219.0 | |
| Feststoffanteil | 135.5 | 61.9 % |

Zur Simulation einer Alterung wurden die Muster nach Trocknung für 24h in fließendem Leitungswasser mit einer Durchflussrate von 6L/h (+/- 1L) gewässert (24 h Wäsche). Ein Set der ungewässerten Muster wurde für 4 Wochen unter UV-Bestrahlung gelegt und nach 1, 2 und 4 Wochen optisch begutachtet. Alle Proben wurden einem Agar-Diffusionstest (AD-Test) unterzogen. Es wurden folgende Testorganismen verwendet:**Ascomyceten und Deuteromyceten** *(Adternaria alternata,Aspergiddus flavus, Aspergillus niger, Aspergillus ustus, Aureobasidium pullulans, Cladosporium herbaru, Paecidomyces variotii, Paecilomyces variotii, Penicillium citrinum* und *Stachybotrys chartarum)* und **Algen** (bekannte Fassadenschädiger: *Phormidium tergestinum, Chlorella vulgaris, Phormidium spec., Desmodesmus communis).*

### Bewertung des AD-Tests

Die Bewertung des Schimmeltestes findet nach 3 Wochen Inkubation bei 29°C +/- 1°C statt.

### Bestanden: [gut / moderat]

- )*: Inhibition des Algenwachstums
- **0 (0-...)**: Oberfläche des Prüfkörpers bewuchsfrei, jedoch Hemmhof um den Prüfkörper [in mm]
- **0**: Oberfläche des Prüfkörpers bewuchsfrei
- **1)#**: Eckenwachstum, marginales Wachstum auf dem Prüfling
- **1**: Oberfläche des Prüfkörpers bis zu 10% bewachsen
- **2**: Oberfläche des Prüfkörpers zu 10-30% bewachsen

### Nicht bestanden: [ungenügend]

- **3**: Oberfläche des Prüfkörpers zu 30-50% bewachsen
- **4**: Oberfläche des Prüfkörpers zu 50-100% bewachsen

**Tabelle 1: Ergebnisse des AD-Test gegen Schimmel und Algen bei Aussendispersionsfarbe basierend auf PVAc (Farbe Nr. 1)**

| **Ausrüstung [Gew.-%]** | **Schimmel** | | **Algen** | |
|---|---|---|---|---|
| | OB | 24h Wäsche | OB | 24h Wäsche |
| Unkonserviert (0.00) | 4 | 4 | 4 | 4 |
| 0.50 | 1 | 3 | 0)* | 0)* |
| 0.75 | 1^{#} | 2 | 0)* | 0)* |
| 1.00 | 0(0-20) | 1 | 0)* | 0)* |
| 1.25 | 0(0-20) | 1 | 0)* | 0)* |
| 1.50 | 0(0-20) | 1^{#} | 0)* | 0)* |
| 1.75 | 0)* | 1^{#} | 0)* | 0)* |
| 2.00 | 0)* | 0(0-20) | 0)* | 0)* |

**Tabelle 2: Ergebnisse des AD-Test gegen Schimmel und Algen bei Aussendispersionsfarbe basierend auf STA (Farbe Nr. 2)**

| **Ausrüstung** | **Schimmel** | | **Algen** | |
|---|---|---|---|---|
| | OB | 24h Wäsche | OB | 24h Wäsche |
| Unkonserviert (0.00) | 4 | 4 | 4 | 4 |
| 0.50 | 1 | 3 | 1 | 1 |
| 0.75 | 1^{#} | 1 | 0)* | 1 |
| 1.00 | 0 | 1 | 0)* | 1 |
| 1.25 | 0(0-20) | 1^{#} | 0)* | 1 |
| 1.50 | 0)* | 0(0-20) | 0)* | 0)* |

## Patentansprüche

1. Biozide Mittel gefunden, enthaltend
A) zumindest ein Algizid ausgewählt aus der Gruppe der Triazin-Algizide, Hamstoff-Algizide und Uracil-Algizide
B) Propiconazol
C) zumindest eine Iodpropargylverbindung.

2. Biozide Mittel nach Anspruch 1, **dadurch gekennzeichnet, dass** zumindest einer der Wirkstoffe gebunden, vorzugsweise mikroverkapselt ist.

3. Biozide Mittel nach Anspruch 1 oder 2, **dadurch gekennzeichnet, dass** die Algizide ausgewählt sind aus der Gruppe Terbutryn, Cybutryn, Propazin, Terbuton, Diuron, Benzthiazuron, Methabenzthiazuron, Tebuthiuron, Isoproturon und Terbacil.

4. Biozide Mittel nach einem der Ansprüche 1 bis 3, **dadurch gekennzeichnet, dass** das Algizid Diuron ist.

5. Biozide Mittel nach einem der Ansprüche 1 bis 4, **dadurch gekennzeichnet, dass** die Iodpropargylverbindungen ausgewählt sind aus der Gruppe 3-Iod-2-propynyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, 3-Iod-2-propinyl-2,4,5-trichlorphenylether, 3-Iod-2-propinyl-4-chlorphenylformal (IPCF), Di-(3-Iod-2-propinyl)hexyl-dicarbamat, 3-Iod-2-propinyl-oxyethanol-ethylcarbamat, 3-Iod-2-propinyl-oxyethanol-phenylcarbamat, 3-Iod-2-propinyl-thioxo-thioethylcarbamat, 3-Iod-2-propinyl-carbaminsäureester (IPC), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Brom-2,3-diiod-2-propenylethylcarbamat, 3-Iod-2-propinyl-n-hexylcarbamat, 3-Iod-2-propinyl-cyclohexyl-carbamat.

6. Biozide Mittel nach einem der Ansprüche 1 bis 5, **dadurch gekennzeichnet, dass** die Iodpropargylverbindung 3-Iod-2-propinyl-butyl-carbamat ist.

7. Biozide Mittel nach einem der Ansprüche 1 bis 6, **dadurch gekennzeichnet, dass** das Gewichtsverhältnis von Propiconazol zu der Summe an Iodpropargylverbindung(en) 1:100 bis 100:1, bevorzugt 1:20 bis 20:1 und besonders bevorzugt 1:9 bis 9:1 beträgt.

8. Biozide Mittel nach einem der Ansprüche 1 bis 7, **dadurch gekennzeichnet, dass** das Gewichtsverhältnis von Algizid(en) zur Summe aus Propiconazol und der Summe an Iodpropargylverbindung(en) 1:100 bis 100:1, bevorzugt 1:20 bis 20:1 und besonders bevorzugt 1:9 bis 9:1 beträgt.

9. Biozide Mittel nach einem der Ansprüche 1 bis 8, **dadurch gekennzeichnet, dass** sie 0,5 bis 80 Gew.-%, vorzugsweise 1 bis 70 Gew.-%, insbesondere 1 bis 60 Gew.-% an Wirkstoffen der Komponenten A), B) und C) enthalten.

10. Biozide Mittel nach einem der Ansprüche 2 bis 9, **dadurch gekennzeichnet, dass** zumindest einer der Wirkstoffe, vorzugsweise zumindest ein Algizid mikroverkapselt ist.

11. Biozide Mittel nach Anspruch 10, **dadurch gekennzeichnet, dass** die Mikrokapseln eine volumengemittelte Teilchengröße von 0,3 bis 100 µm aufweisen.

12. Biozide Mittel nach Anspruch 10 oder 11, **dadurch gekennzeichnet, dass** die Mikrokapseln ein Melamin-Formaldehyd Polymer als Verkapselungsmaterial enthalten.

13. Verwendung der bioziden Mittel nach einem der Ansprüche 1 bis 12 zum Schutz von technischen Materialien, vorzugsweise von Klebstoffen, Leimen, Papier, Karton, Leder, Holz, Holzwerkstoffen, Holz-Plastik-Verbundstoffen, Anstrichmitteln, Beschichtungsmitteln, Putzen, Kühlschmiermittel und Wärmeüberleitungsflüssigkeiten.

14. Verfahren zum Schutz von technischen Materialien vor Befall und/oder Zerstörung durch Mikroorganismen, **dadurch gekennzeichnet ist, dass** man biozide Mittel nach einem der Ansprüche 1 bis 12 auf den Mikroorganismus oder dessen Lebensraum einwirken lässt.

15. Technische Materialien, erhältlich durch Behandlung von technischen Materialien mit einem bioziden Mittel nach einem der Ansprüche 1 bis 12.
